Europäisches Patentamt

European Patent Office

Office européen des brevets

(11) Publication number: **0 463 750 A1**

# EUROPEAN PATENT APPLICATION

(21) Application number: **91305054.8**

(22) Date of filing: **04.06.91**

(51) Int. Cl.⁵: **G11B 5/53**

(30) Priority: **11.06.90 JP 152463/90**

(43) Date of publication of application:
**02.01.92 Bulletin 92/01**

(84) Designated Contracting States:
**DE FR GB**

(71) Applicant: **SONY CORPORATION**
**7-35 Kitashinagawa 6-Chome Shinagawa-ku**
**Tokyo 141(JP)**

(72) Inventor: **Hasegawa, Shinichi, c/o Patents Division**
**Sony Corporation, 6-7-35 Kitashinagawa**
**Shinagawa-ku, Tokyo 141(JP)**
Inventor: **Senshu, Yoichirou, c/o Patents Division**
**Sony Corporation, 6-7-35 Kitashinagawa**
**Shinagawa-ku, Tokyo 141(JP)**
Inventor: **Fukahori, Kenichi, c/o Patents Division**
**Sony Corporation, 6-7-35 Kitashinagawa**
**Shinagawa-ku, Tokyo 141(JP)**
Inventor: **Uetake, Akihiro, c/o Patents Division**
**Sony Corporation, 6-7-35 Kitashinagawa**
**Shinagawa-ku, Tokyo 141(JP)**

(74) Representative: **Thomas, Christopher Hugo et al**
**D Young & Co 10 Staple Inn**
**London WC1V 7RD(GB)**

(54) **Rotary magnetic head drums.**

(57) A rotary magnetic head drum (A) for a recording and/or reproducing apparatus has a magnetic head (9) in which a plurality of head chips (12a, 12b) are closely mounted parallel on a rotary drum (2), and a dynamic pressure bearing (1) in which a sleeve (5) inserted into a rotating member (2) is rotatably supported by fluid.

*FIG. 3*

Rank Xerox (UK) Business Services

This invention relates to rotary magnetic head drums for use with, for example, a digital video tape recorder (digital VTR).

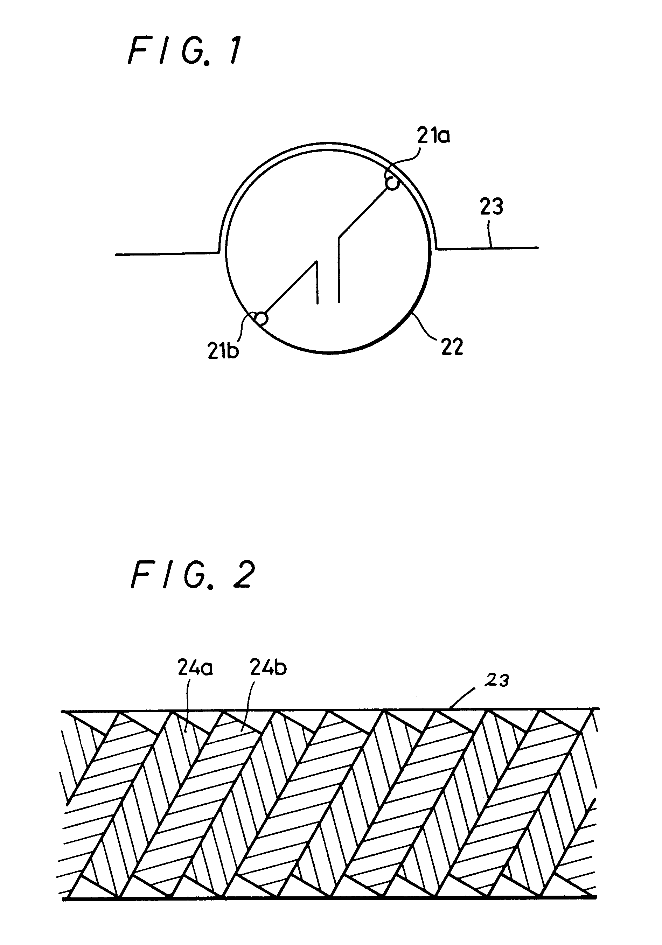

Digital VTRs have been developed to record and reproduce a digital video signal on and from a magnetic tape utilizing rotary heads. Such a digital VTR will now be described with reference to Figure 1.

Two magnetic heads 21a and 21b are mounted on a rotary drum 22 with an angular spacing of 180 degrees, and a magnetic tape 23 is wrapped around the drum 22 at a tape wrapping angle of 180 degrees, and is transported at a predetermined tape speed so that, as shown in Figure 2, recording tracks 24a and 24b are formed on the tape 23 by the heads 21a and 21b.

In most of such VTRs, a ball bearing is employed as the bearing of the drum 22. In the case of a digital VTR, the diameter of the drum 22 must be reduced, it must be rotated at high speed, and the track pitch must be reduced, which necessitates a bearing which can be rotated with high accuracy without noise. A ball bearing, however, cannot meet the above requirements.

These problems can be overcome if a dynamic pressure bearing as used in some analogue VTRs is used. In a dynamic pressure bearing, a shaft is rotatably supported by fluid (lubricant) within the bearing, so that the size of the bearing can be determined with relatively large freedom in accordance with the diameter of the rotary drum. Also, the shaft rotates in a non-contact fashion, so it can be rotated at high speed without noise. Moreover, the efficiency can be changed by changing the lubricant.

However, when a dynamic pressure bearing is used as the bearing of a rotary drum, for example, comprising an upper rotary drum and a lower stationary drum of a digital VTR, in the stop mode the upper rotary drum is inclined relative to the rotary shaft, because of features of the dynamic pressure bearing. When a dynamic pressure bearing is used for the shaft of the drum 22 of Figure 1, that is, for a single head system in which a pair of heads are spaced by 180 degrees, the pairing adjustment made in the stationary state is displaced by an amount corresponding to the inclination of the upper drum in the operating mode. Although the inclination is determined on the basis Of the bearing gap, the bearing length and the drum diameter, the displacement in the height direction falls in a range of from several micrometers to several tens of micrometers, thus considerably degrading the accuracy of the bearing. Accordingly, the track pitch cannot be reduced, and the recording density cannot be increased, which is indispensable for a digital VTR.

According to the present invention there is provided a rotary magnetic head drum, for a recording and/or reproducing apparatus, the head drum comprising:

a magnetic head in which a plurality of head chips are closely mounted in parallel on a rotary drum; and

a dynamic pressure bearing in which a shaft inserted into a rotating member of said rotary drum is rotatably supported by fluid.

The invention will now be described by way of example with reference to the accompanying drawings, throughout which like parts are referred to by like references, and in which:

Figure 1 is a schematic diagram of a known head arrangement of a digital VTR;

Figure 2 is a diagram showing recording tracks formed on a magnetic tape;

Figure 3 is a cross-sectional view of an embodiment of rotary magnetic head drum for a digital VTR and according to the present invention; and

Figures 4 and 5 are views of a magnetic head.

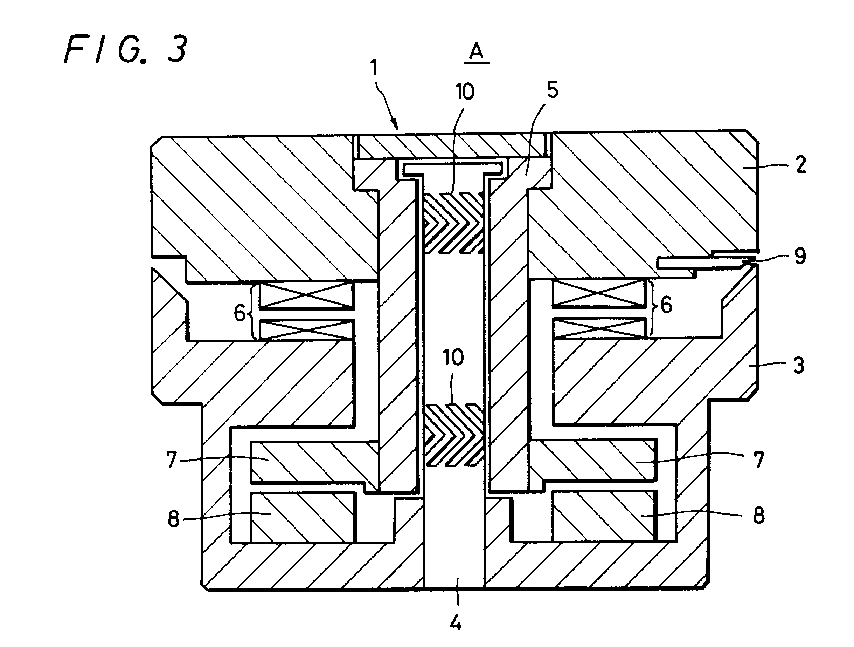

As shown in Figure 3, a rotary magnetic head drum comprises a dynamic pressure bearing 1, an upper drum 2 and a lower drum 3. A sleeve 5 is secured to the inner surface of the upper drum 2 so as rotatably to support a shaft 4 which extends upward from the lower drum 3. The lower drum 3 and the shaft 4 are stationary, while the sleeve 5 is rotated unitarily as one body with the upper drum 2 about the shaft 4. The upper and lower drums 2 and 3 are made of, for example, an aluminium alloy, whereas the sleeve 5 is made of a material softer than the aluminium alloy, for example, copper alloy, in order to prevent the shaft 4 from being worn by contact between the sleeve 5 and the shaft 4 when the supper drum 2 stops rotating.

A rotary transformer 6, a rotor 7 and a stator 8 form a rotary driving system of the upper drum 2.

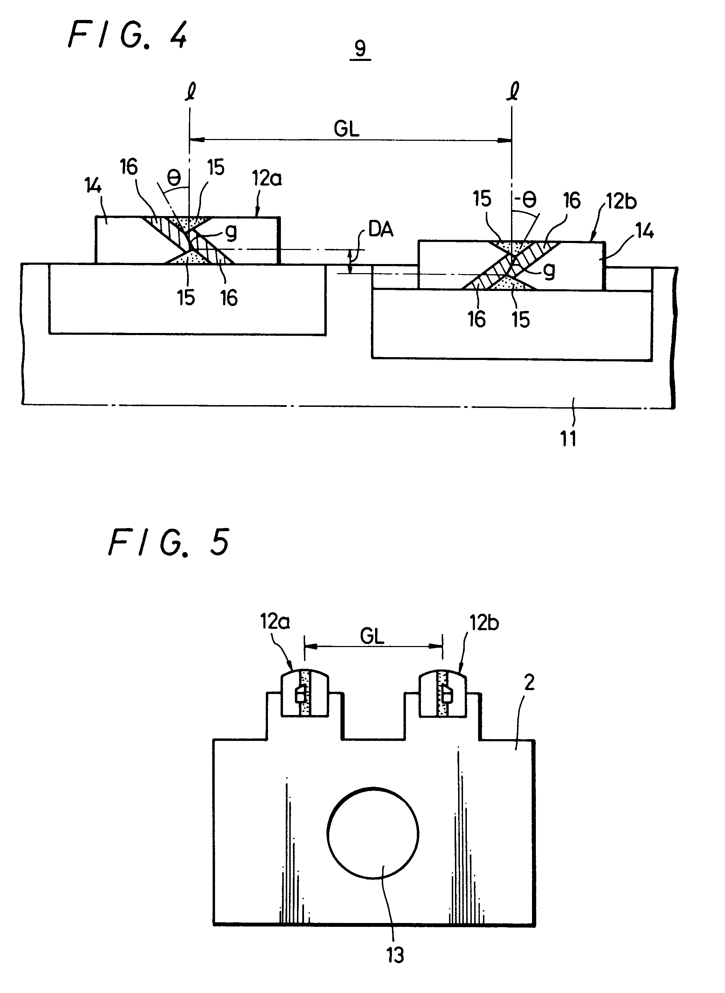

As shown also in Figures 4 and 5, a magnetic head 9 is formed of two head chips 12a and 12b which are disposed closely on one head base 11 parallel to each other. A screw for securing the head base 11 to the upper drum 2 of the rotary drum A shown in Figure 3 is inserted into an aperture 13. The two head chips 12a and 12b are respectively formed such that ferrite heads 14 are obliquely cut away at their portions near gaps g, which are then sputtered (or sprayed) with Sendust. The respective gaps g are inclined relative to the vertical lines 1 (shown by one-dot chain lines) by angles $+ \theta$ and $- \theta$, respectively. In addition to a glass film 15 and a Sendust sputtering film 16, a predetermined spacing GL is provided between the respective gaps g in the head scanning direction, so as to avoid detrimental influences, such as cross-talk. The head 9 is mounted on the head mounting surface of the upper drum 2 using a screw (not shown), and the positions of the head chips 12a and 12b in the track pitch direction are aligned by using pairing adjustment screws (not shown). Since two head chips 12a and 12b are mounted close to each other, the pairing adjustment can be made with relatively high accuracy even if the upper drum 2 or the shaft 4 is inclined.

When the upper drum 2 is rotated by the above-described rotary driving system, it is rotated about the shaft 4 with substantially no noise by a pushing force of fluid existing within the bearing 1, that is, within the sleeve 5, generated against the shaft 4 in dependence on the rotation of the upper drum 2, and the recording and/or reproduction is made on a magnetic tape (not shown) helically transported along the circumferential surface of the drum A by the head 9 secured on the upper drum 2. Referring to Figure 3, grooves 10 of V-shaped configuration which are formed on the outer surface of the shaft 4 are used to enable the upper drum 2 stably to rotate with respect to the shaft 4. That is, the fluid flows along the grooves 10 so that the vertexes of the grooves 10 become high-pressure portions, or act as so-called wedges from a metal bearing standpoint, so the upper drum 2 is rotated with high accuracy.

Since the dynamic pressure bearing 1 is used as the bearing of the drum A, it can be reduced in diameter and rotated at high speed. Also, the upper drum 2 can be rotated with high accuracy and very quietly. In addition, since the head 9 in which the plurality of head chips 12a and 12b are closely provided parallel to each other is used, poor pairing adjustment can be avoided. Thus, by using the head 9, high-accuracy rotation, which is the advantage of the dynamic pressure bearing 1, can be effectively utilized, and satisfactory track patterns can be formed on the magnetic tape. As a result, the track pitch can be reduced more and the recording density can be increased.

With the above head 9, a video signal of, for example, one field is divided into two parts, and the divided signals are respectively supplied to the two head chips 12a and 12b, whereby signals of two channels can be recorded on the magnetic tape simultaneously, and reproduced simultaneously. In view of the delay time of the succeeding head chip, 12b say, it is preferable to provide a level difference DA (see Figure 4) in the track pitch direction between the head chips 12a and 12b.

While the invention has been described as applied to a rotary drum comprising a lower stationary drum and an upper rotating drum 2, it can also be applied to a rotary drum comprising a lower rotary drum and an upper stationary drum, and to a rotary drum in which only a head disc is rotated.

**Claims**

1. A rotary magnetic head drum (A), for a recording and/or reproducing apparatus, the head drum (A) comprising:
a magnetic head (9) in which a plurality of head chips (12a, 12b) are closely mounted in parallel on a rotary drum (2); and
a dynamic pressure bearing (1) in which a shaft (4) inserted into a rotating member (2) of said rotary drum (2) is rotatably supported by fluid.

2. A head drum according to claim 1 wherein said shaft (4) has grooves of V-shaped configuration.

3. A head drum according to claim 1 wherein said rotating member (2) has opposing said shaft (4) a sleeve (5) made of a different material.

4. A head drum according to claim 3 wherein said rotating member (2) is made of aluminium alloy and said sleeve (5) is made of copper alloy.

5. A head drum according to any one of the preceding claims wherein said head chips (12a, 12b) are mounted on the same head base (11) parallel to each other.

6. A head drum according to any one of the preceding claims wherein said head chips (12a, 12b) are formed of ferrite heads (12a, 12b) obliquely cut away near their gaps (9) on which Sendust (16) is sputtered.

7. A head drum according to claim 3 wherein said sleeve (5) has attached thereon a rotor (7) of driving means for driving said rotating member (2).

8. A head drum according to claim 7 wherein said rotating member (2) is an upper drum (2).

9. A head drum according to claim 8 wherein a stator (8) of said driving means is attached to a lower drum (3).

10. A head drum according to claim 9 wherein said shaft (4) is secured to said lower drum (3).

11. A head drum according to claim 1 wherein said shaft (4) is secured to said rotating member (2).

F I G. 1

21a

23

22

21b

F I G. 2

24a    24b

23

FIG. 3

## FIG. 4

## FIG. 5

European
Patent Office

EUROPEAN SEARCH
REPORT

Application Number

**EP 91 30 5054**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | DE-A-3 707 535   (VICTOR COMPANY OF JAPAN)<br>* column 1, lines 35 - 39; figure 2 *<br>– – – | 1,5 | G 11 B 5/53 |
| Y,A | US-A-4 573 807   (TAKAFUMI ASADA & AL.)<br>* column 4, lines 10 - 11; claim 1; figure 5 *<br>– – – | 1,2,3,<br>7-10 | |
| A | EP-A-0 180 852   (HITACHI, LTD.)<br>* page 4, lines 19 - 24; claim 1; figure 1 *<br>– – – | 1,2,7-9,<br>11 | |
| A | US-A-4 316 225   (TERUO MARUYAMA & AL.)<br>* column 4, lines 24 - 36; figure 1 *<br>– – – – – | 3,4 | |

TECHNICAL FIELDS
SEARCHED (Int. Cl.5)

G 11 B
H 01 F

The present search report has been drawn up for all claims

| Place of search | Date of completion of search | Examiner |
|---|---|---|
| Berlin | 15 October 91 | GERARD E.A.S. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

& : member of the same patent family, corresponding
   document